# FASCICULE DE BREVET EUROPEEN

(11) **EP 1 370 440 B1**
(45) Date de publication et mention de la délivrance du brevet: **10.11.2004**
(21) Numéro de dépôt: 02718198.1
(22) Date de dépôt: 20.03.2002
(51) Int. Cl.: B60N 2/48, B60R 11/02

(54) **APPUIE-TETE NOTAMMENT POUR SIEGE DE VEHICULE AUTOMOBILE**
KOPFSTÜTZE, INSBESONDERE FÜR KRAFTFAHRZEUGSITZ
HEAD REST, PARTICULARLY FOR A MOTOR VEHICLE SEAT

(30) Priorité: 21.03.2001 FR 0103795
(43) Date de publication de la demande: 17.12.2003
(73) Titulaire: Security Vision Concept, 1143 Luxembourg (LU)
(72) Inventeur: JOST, Gilbert, L-4970 Bettange/Mess (LU)
(74) Mandataire: Waxweiler, Jean
(86) Numéro de dépôt international: PCT/EP2002/003110
(87) Numéro de publication internationale: WO 2002/074577

(56) Documents cités:
- DE-A- 19 652 591
- FR-A- 2 796 017
- US-A- 6 022 078

## Description

La présente invention concerne une nouvelle structure d'appui-tête pour les sièges de véhicules automobiles, ou autres types de sièges.

Les appuis-tête classiques qui équipent les sièges de véhicules automobiles sont constitués d'un coussin en mousse synthétique recouvert d'une structure de housse en tissu, matière synthétique ou cuir, et qui renferme un insert rigide permettant la fixation des deux tiges parallèles destinées à venir s'ancrer dans des manchons d'accueil implantés au niveau de la partie supérieure du siège équipé.

Dans certaines structures d'appuis-tête l'entraxe des tiges d'ancrage ne peut pas être modifié ; il est alors nécessaire, dès la fabrication, de prévoir différentes versions d'appuis-tête, fonction de l'entraxe des manchons d'accueil dans le siège de réception.

Dans d'autres modèles connus, décrits par exemple dans les documents US-A-6 022 078, DE-A-196 52 591, ou encore FR-A-2 796 017, l'entraxe des tiges d'ancrage est modulable, mais les moyens de fixation internes de ces tiges, adaptés à cette modularité, sont relativement complexes.

D'autre part, comme on peut le voir dans les documents US-A-5 713 633 ou DE-A-196 01 582, certains modèles d'appuis-tête récents sont équipés d'un écran notamment du type à cristaux liquides pour lecteur DVD, console de jeux, ou autre... intégré dans leur face arrière pour être accessibles depuis les sièges arrière du véhicule. La présence de ces écrans complique encore la structure de fixation intégrée dans l'appui-tête.

Un premier but de la présente invention est de proposer une nouvelle structure d'appui-tête muni de tiges d'ancrage à entraxe modulable, de conception simple et facile à monter.

A cet effet, l'appui-tête conforme à la présente invention comporte des tiges d'ancrage munies de tiges filetées qui s'étendent à l'équerre à partir de leur extrémité supérieure ; ces tiges filetées viennent se visser chacune dans l'une des extrémités d'un corps de réception qui est muni d'un filetage interne adapté et qui est associé à des moyens de fixation sur un socle de réception intégré dans le coussin en mousse synthétique.

Selon une forme de réalisation préférée, les tiges filetées associées aux tiges d'ancrage comportent chacune un contre-écrou destiné à venir en butée contre le corps de réception, pour verrouiller le positionnement desdites tiges d'ancrage.

Toujours selon une forme de réalisation préférée, le corps de réception des tiges filetées consiste en un manchon cylindrique qui vient se loger dans le fond d'un étrier rapporté en forme de U plat ; cet étrier en U vient prendre en sandwich une patte d'accrochage aménagée sur le socle intégré, et il est solidarisé avec ladite patte d'accrochage par un système de fixation du type vis-écrou.

Le socle intégré comporte avantageusement un logement adapté pour accueillir le manchon cylindrique et les tiges filetées qui prolongent à l'équerre les extrémités supérieures des tiges d'ancrage. Ce logement débouche sur la face frontale ou sur la face dorsale du socle ; il est positionné juste au-dessous de la patte d'accrochage de l'étrier en U et il comporte des ouvertures inférieures pour le passage des deux tiges d'ancrage. Ces ouvertures sont adaptées aux différents entraxes possibles des tiges d'ancrage.

Selon encore une autre caractéristique, le socle intégré comporte une ouverture aménagée sous la patte d'accrochage de l'étrier en U, pour faciliter le positionnement dudit étrier.

Pour conférer un caractère quasi universel à l'appui-tête conforme à la présente invention, on prévoit des manchons d'adaptation rapportés, aptes à compenser la différence possible entre le diamètre externe des tiges d'ancrage et le diamètre interne des manchons d'accueil implantés dans la partie supérieure du siège de réception. Ces manchons rapportés comportent avantageusement une collerette supérieure permettant leur maintien sur lesdits manchons d'accueil.

Un autre but de la présente invention est de proposer une nouvelle structure d'appui-tête simplifiée dans laquelle est intégré un écran, par exemple du type à cristaux liquides pour lecteur DVD, console de jeux, ou autre...

Toujours selon une forme de réalisation préférée, cet écran est encastré dans la face arrière de l'appui-tête et il est verrouillé de manière amovible dans un boîtier lui-même encastré dans ladite face arrière et fixé sur le socle intégré.

Selon une forme de réalisation préférée, le boîtier d'écran est encastré dans une ouverture aménagée dans la face arrière de l'appui-tête, laquelle ouverture est délimitée par un cadre rigide dont la largeur correspond sensiblement à l'épaisseur dudit boîtier et sur la bordure interne duquel vient prendre appui le socle intégré. Le fond du boîtier d'écran est solidarisé avec le socle intégré au moyen de vis de fixation, et la face avant de ce boîtier est munie d'une collerette périphérique débordante, adaptée pour venir en appui contre la bordure externe dudit cadre rigide.

La mousse synthétique formant le coussin d'appui-tête est avantageusement surmoulée sur ce cadre rigide.

Toujours selon l'invention, les tiges d'ancrage de l'appui-tête sont creuses et le câblage d'alimentation de l'écran intégré passe dans l'une au moins desdites tiges.

L'invention sera encore illustrée, sans être aucunement limitée, par la description suivante d'un mode de réalisation particulier, donné uniquement à titre d'exemple et représenté sur les dessins annexés dans lesquels :
- la figure 1 est une vue de côté schématique d'un appui-tête conforme à la présente invention, positionné sur le siège d'un véhicule automobile ;
- la figure 2 est une vue schématique de l'appui-tête, en coupe transversale partiellement éclatée ;
- la figure 3 est une vue en perspective éclatée illustrant le principe de fixation des tiges d'ancrage sur le socle intégré de l'appui-tête ;
- la figure 4 est une vue agrandie, de face, qui montre le détail de l'assemblage des tiges d'ancrage sur le manchon cylindrique d'accueil ;
- la figure 5 est une vue en perspective du socle intégré sur lequel sont fixées les tiges d'ancrage à entraxe modulable ;
- la figure 6 est une vue agrandie, en coupe selon 6-6 de la figure 5.

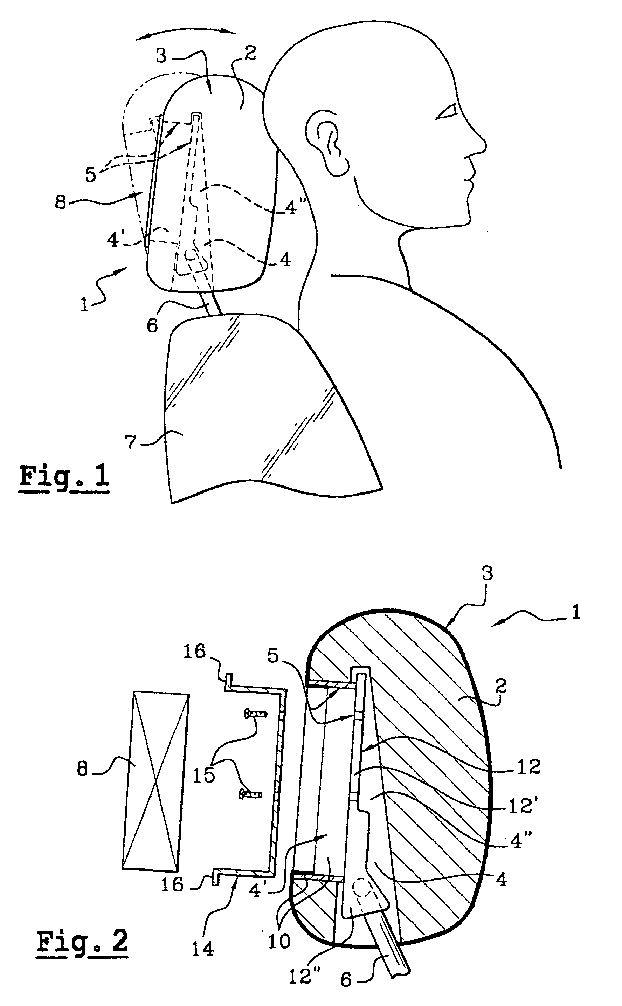

Tel qu'illustré sur les figures 1 et 2, l'appui-tête 1 est constitué d'un coussin en mousse synthétique 2 recouvert d'une structure de housse 3 en tissu, matière synthétique ou cuir.

Un logement 4 est aménagé à l'intérieur du coussin 2, recevant une structure d'insert 5 destinée, d'une part, à la fixation des deux tiges parallèles 6 qui permettent l'ancrage de l'appui-tête 1 sur le dessus du siège 7 du véhicule, et d'autre part à la fixation d'un écran encastré 8, par exemple du type à cristaux liquides (LCD) pour lecteur DVD, console de jeux, ou autres. L'écran 8 est encastré dans la face arrière de l'appui-tête 1 pour être accessible depuis les sièges arrière du véhicule.

La structure d'insert 5 est constituée :
- d'un cadre rigide 10, en matière plastique ou en métal, qui délimite la partie arrière 4' du logement 4 (cette partie de logement 4' a une forme générale parallélépipédique et elle débouche dans la face arrière du coussin 2 pour permettre l'encastrement de l'écran 8), et
- d'un socle 12 intégré dans la partie avant 4" du logement 4 (cette partie de logement 4" débouche dans la face inférieure du coussin 2).

Le socle intégré 12 vient en appui contre la bordure interne du cadre rigide 10 ; il est solidarisé avec ce dernier par l'intermédiaire d'un boîtier 14 qui vient s'insérer dans la partie de logement 4' et qui est agencée pour réceptionner l'écran LCD 8. L'épaisseur du boîtier 14 correspond sensiblement à la largeur du cadre rigide 10 ; son fond est fixé sur le socle 12 au moyen de vis 15 et il comporte une collerette périphérique débordante 16 adaptée pour venir en appui contre la bordure externe du cadre rigide 10.

On comprend bien qu'une fois les vis de fixation 15 mises en place, l'ensemble se tient correctement à l'intérieur du coussin de mousse 2. Pour améliorer encore cette tenue, le coussin de mousse 2 peut être surmoulé sur le cadre rigide 10.

Le socle 12 consiste en une pièce rapportée, par exemple réalisée en matière plastique moulée. Il comprend un plateau 12' dont les dimensions sont légèrement supérieures à celles du cadre rigide 10, prolongé vers le bas par un renflement 12" dont la structure est détaillée plus loin.

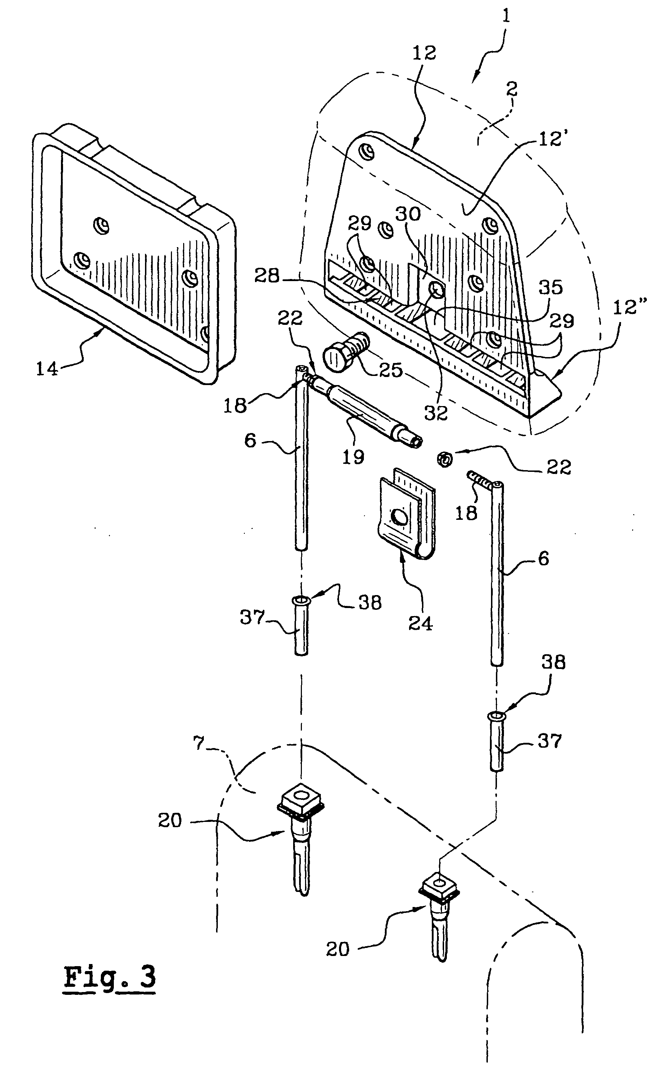

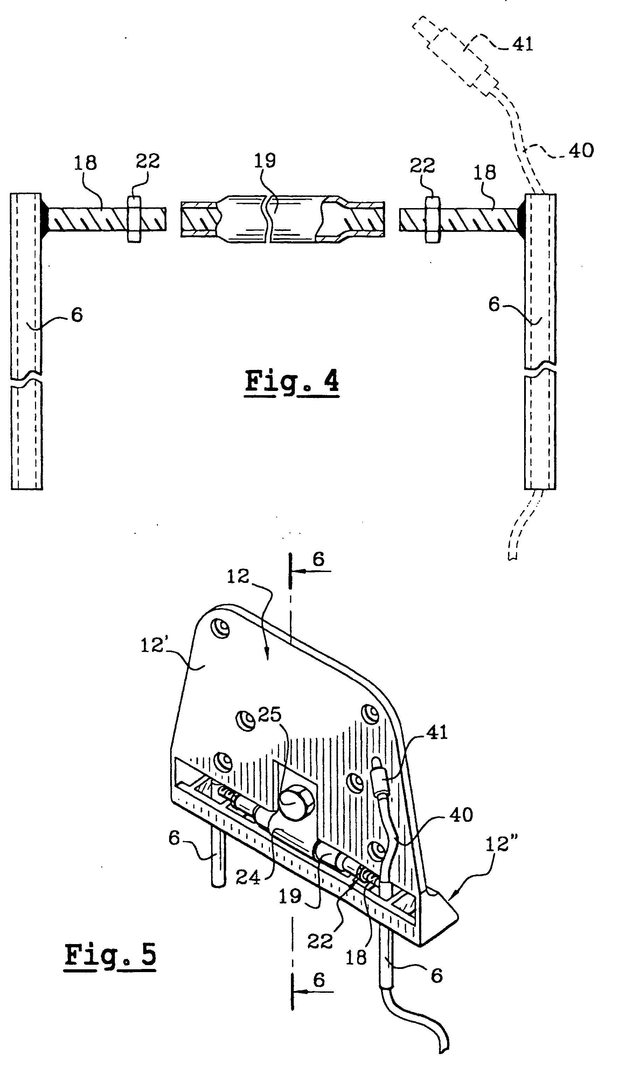

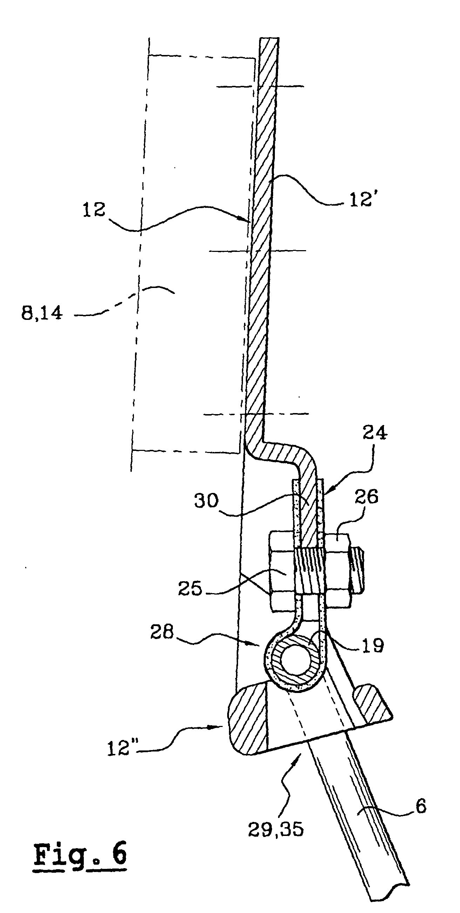

Les deux tiges d'ancrage 6 de l'appui-tête sont fixées sur le socle intégré 12 de la manière illustré sur les figures 3 à 6.

Ces deux tiges d'ancrage 6 sont ici des tiges creuses métalliques à l'extrémité supérieure desquelles sont soudées à l'équerre des tiges filetées 18 aptes à venir se visser dans les extrémités d'un corps de réception 19 en forme de manchon cylindrique. Le pas de vis intérieur du manchon 19 est bien entendu adapté au pas de vis extérieur des tiges filetées 18.

On comprend alors que le manchon 19 sert de pièce de liaison entre les deux tiges creuses 6 et qu'il permet de régler très facilement l'entraxe de ces deux tiges 6 en adaptant la longueur de vissage des tiges filetées 18.

L'entraxe des tiges 6 est réglé en fonction de l'entraxe des manchons d'accueil 20 qui équipent le siège 7 du véhicule. Le maintien de cet entraxe est assuré par le serrage de contre-écrous 22 qui équipent les tiges filetées 18 (figures 3, 4 et 5).

La fixation de cet assemblage 6, 18, 19 sur le socle 12 est réalisée au moyen d'un étrier 24 en forme de U plat, associé à un système de serrage type vis-écrou 25-26.

Pour cela, le manchon 19 avec les tiges filetées 18 et les contre-écrous 22 sont insérés dans un logement longitudinal 28 aménagé dans le renflement inférieur 12" du socle 12. Ce logement 28 débouche dans la face frontale du socle 12 et il comporte des ouvertures 29 orientées vers le bas pour le passage des tiges d'ancrage 6 ; ces ouvertures inférieures 29 sont adaptées en fonction des différents entraxes possibles des tiges 6.

L'étrier en U 24 vient envelopper le manchon cylindrique 19 et il se positionne de part et d'autre d'une patte d'accrochage 30 aménagée dans la partie centrale du socle 12, juste au-dessus du logement 28. Cette patte d'accrochage 30 comporte un orifice 32 pour le passage du système vis-écrou de fixation 25-26.

La mise en place de l'étrier 24 est facilitée par la présence d'une ouverture 35 prévue dans le renflement 12" du socle 12, sous la patte d'accrochage 30.

Cette fixation des tiges 6 sur le socle 12 est réalisée avant l'insertion du socle 12 dans le coussin 2 de l'appui-tête. Une fois le socle 12 et le boîtier 14 correctement positionnés et fixés, on peut mettre en place le revêtement d'appui-tête 3 ou finir le positionnement de ce revêtement, selon le cas.

A titre de variante, le logement 28 pourrait de la même manière déboucher dans la face dorsale du socle 12. On peut aussi envisager la présence d'organes monoblocs aménagés sur le bord du logement 28 pour bloquer le positionnement du manchon cylindrique 19.

De manière connue, les tiges d'ancrage 6 peuvent comporter un système de crantage pour permettre le réglage du positionnement en hauteur de l'appui-tête sur les manchons d'accueil 20 du siège 7.

Si le diamètre des tiges 6 n'est pas adapté au diamètre des manchons d'accueil 20, on peut utiliser des manchons d'adaptation 37, visibles sur la figure 3, permettant de compenser les différences de dimensions. Ces manchons d'adaptation 37 comportent une collerette supérieure 38 qui permet leur maintien en position sur les manchons d'accueil 20 ; le diamètre externe des manchons d'adaptation 37 est adapté au diamètre interne des manchons d'accueil 20, et leur diamètre interne est adapté au diamètre externe des tiges d'ancrage 6.

Pour obtenir un certain caractère d'universalité, un jeu complet de manchons d'adaptation 37 peut être proposé avec l'appui-tête 1, correspondant aux différentes dimensions possibles des manchons d'accueil 20.

Comme on peut le voir sur la figure 1, une fois mis en place, l'appui-tête peut être réglé en inclinaison en faisant pivoter légèrement à force le socle 12 autour du manchon cylindrique 19. Le serrage du système vis-écrou 25-26 est adapté pour permettre ce réglage d'inclinaison.

Sur les figures 3, 4 et 5, on remarque encore la présence d'un câblage 40 destiné à assurer l'alimentation en énergie notamment de l'écran 8. Comme on peut le voir, ce câblage 40 passe dans l'une des tiges d'ancrage creuses 6. L'une de ses extrémités comporte un connecteur 41 destiné à venir se brancher sur l'écran 8 par l'intérieur de l'appui-tête ; son autre extrémité est destinée à passer dans le siège 7 équipé, en vue de la connexion à la source d'alimentation, ainsi qu'aux sources audio et vidéo éventuelles.

Cette structure d'appui-tête est de conception simple et elle est très facile à monter; elle permet de proposer un ensemble complet apte à venir s'adapter sur n'importe quel type de siège équipé de manchons d'accueil. Le cas échéant, le système de fixation de l'écran 8 sur le socle 12 peut être mis en oeuvre indépendamment du principe de réglage de l'entraxe des tiges d'ancrage.

## Revendications

1. Appui-tête, notamment pour siège de véhicule automobile, constitué d'un coussin en mousse synthétique (2) qui renferme un socle intégré (12) permettant la fixation des deux tiges parallèles (6) d'ancrage sur le siège de réception (7), **caractérisé en ce qu'**il comporte des tiges d'ancrage (6) munies de tiges filetées (18) qui s'étendent à l'équerre à partir de leur extrémité supérieure, lesquelles tiges filetées (18) viennent se visser chacune dans l'une des extrémités d'un corps de réception (19) qui est muni d'un filetage interne adapté et qui est associé à des moyens de fixation (24, 25, 26) sur ledit socle intégré (12).

2. Appui-tête selon la revendication 1, **caractérisé en ce que** les tiges filetées (18) associées aux tiges d'ancrage (6) comportent chacune un contre-écrou (22) destiné à venir en butée contre le corps de réception (19) pour verrouiller le positionnement desdites tiges d'ancrage (6).

3. Appui-tête selon l'une quelconque des revendications 1 ou 2, **caractérisé en ce que** le corps de réception (19) des tiges filetées (18) consiste en un manchon cylindrique, lequel manchon (19) vient se loger dans le fond d'un étrier rapporté (24) en forme de U plat, lequel étrier (24) vient prendre en sandwich une patte d'accrochage (30) aménagée sur le socle intégré (12) et est solidarisé avec ladite patte d'accrochage (30) par un système de fixation type vis-écrou (25-26).

4. Appui-tête selon la revendication 3, **caractérisé en ce qu'**il comporte un socle intégré (12) muni d'un logement (28) adapté pour accueillir le manchon cylindrique (19) et les tiges filetées (18) qui prolongent à l'équerre les extrémités supérieures des tiges d'ancrage (6), lequel logement (28), débouchant sur la face frontale ou sur la face dorsale dudit socle (12), est positionné juste dessous la patte d'accrochage (30) de l'étrier en U (24), et lequel logement (28) comporte des ouvertures inférieures (29) pour le passage desdites tiges d'ancrage (6), lesdites ouvertures (29) étant adaptées aux différents entraxes possibles desdites tiges d'ancrage (6).

5. Appui-tête selon la revendication 4, **caractérisé en ce que** le logement (28) du socle (12) comporte une ouverture (35), aménagée sous la patte d'accrochage (30), pour faciliter le positionnement de l'étrier en U (24).

6. Appui-tête selon l'une quelconque des revendications 1 à 5, **caractérisé en ce qu'**il comporte des manchons d'adaptation (37) rapportés, aptes à compenser la différence entre le diamètre externe des tiges d'ancrage (6) et le diamètre interne des manchons d'accueil (20) implantés dans la partie supérieure du siège de réception (7), lesquels manchons d'adaptation (37) comportent une collerette supérieure (38) permettant leur maintien sur lesdits manchons d'accueil (20).

7. Appui-tête selon l'une quelconque des revendications 1 à 6, **caractérisé en ce qu'**il comporte un écran (8), type écran à cristaux liquides pour lecteur DVD ou pour console de jeux par exemple, encastré dans sa face arrière, lequel écran (8) est verrouillé de manière amovible dans un boîtier (14) lui-même encastré dans ladite face arrière et fixé sur le socle intégré (12).

8. Appui-tête selon la revendication 7, **caractérisé en ce qu'**il comporte un boîtier d'écran (14) encastré dans un logement (4') aménagé dans la face arrière du coussin de mousse (2), lequel logement (4') est délimité par un cadre rigide (10) dont la largeur correspond sensiblement à l'épaisseur dudit boîtier (14) et sur la bordure interne duquel vient prendre appui le socle intégré (12), le fond dudit boîtier (14) étant solidarisé avec ledit socle intégré (12) au moyen de vis de fixation (15), et la face avant dudit boîtier (14) étant munie d'une collerette périphérique (16) débordante, adaptée pour venir en appui contre la bordure externe dudit cadre rigide (10).

9. Appui-tête selon la revendication 8, **caractérisé en ce qu'**il comporte un coussin (2) en mousse synthétique surmoulé sur le cadre rigide (10).

10. Appui-tête selon l'une quelconque des revendications 7 à 9, **caractérisé en ce qu'**il comporte des tiges d'ancrage (6) creuses dans l'une au moins desquelles passe le câblage (40) destiné à l'alimentation de l'écran (8).

## Patentansprüche

1. Kopfstütze, insbesondere für einen Kraftfahrzeugsitz, die aus einem synthetischen Schaumstoffkissen (2) besteht, das einen integrierten Sockel (12) umschließt, welcher die Befestigung von zwei parallelen Verankerungsstangen (6) an dem Aufnahmesitz (7) ermöglicht, **dadurch gekennzeichnet, dass** sie Verankerungsstangen (6) umfasst, die mit Gewindestiften (18) ausgestattet sind, welche sich von ihrem oberen Ende ausgehend im rechten Winkel erstrecken, wobei sich die Gewindestifte (18) jeder in eines der Enden eines Aufnahmekörpers (19) einschrauben lassen, der mit einem passenden Innengewinde ausgestattet ist und der Befestigungsmitteln (24, 25, 26) an dem integrierten Sockel (12) zugeordnet ist.

2. Kopfstütze nach Anspruch 1, **dadurch gekennzeichnet, dass** die den Verankerungsstangen (6) zugeordneten Gewindestifte (18) jeder eine Sicherungsmutter (22) umfassen, die dazu vorgesehen ist, an dem Aufnahmekörper (19) zur Anlage zu kommen, um die Positionierung der Verankerungsstangen (6) zu blockieren.

3. Kopfstütze nach irgendeinem der Ansprüche 1 oder 2, **dadurch gekennzeichnet, dass** der Aufnahmekörper (19) für die Gewindestifte (18) aus einer zylinderförmigen Hülse besteht, wobei die Hülse (19) in dem Boden eines angesetzten flachen U-förmigen Bügels (24) aufgenommen wird, wobei der Bügel (24) eine in dem integrierten Sockel (12) angeordnete Verhakungslasche (30) zwischen sich aufnimmt und mit der Verhakungslasche (30) durch ein Befestigungssystem der Art Schraube-Mutter (25-26) fest verbunden wird.

4. Kopfstütze nach Anspruch 3, **dadurch gekennzeichnet, dass** sie einen integrierten Sockel (12) umfasst, der mit einer Aufnahme (28) versehen ist, die angepasst ist, um die zylinderförmige Hülse (19) und die Gewindestifte (18) aufzunehmen, welche die oberen Enden der Verankerungsstangen (6) im rechten Winkel verlängern, wobei die Aufnahme (28), die auf der Vorderseite oder auf der Rückseite des Sockels (12) einmündet, dicht unter der Verhakungslasche (30) des U-förmigen Bügels (24) positioniert ist, und die Aufnahme (28) untere Öffnungen (29) für den Durchgang der Verankerungsstangen (6) umfasst, wobei die Öffnungen (29) an die möglichen unterschiedlichen Achsenabstände der Verankerungsstangen (6) angepasst sind.

5. Kopfstütze nach Anspruch 4, **dadurch gekennzeichnet, dass** die Aufnahme (28) des Sockels (12) eine Öffnung (35) umfasst, die unter der Verhakungslasche (30) angeordnet ist, um die Positionierung des U-förmigen Bügels (24) zu vereinfachen.

6. Kopfstütze nach irgendeinem der Ansprüche 1 bis 5, **dadurch gekennzeichnet, dass** sie angesetzte Anpassungshülsen (37) umfasst, welche den Unterschied zwischen dem Außendurchmesser der Verankerungsstangen (6) und dem Innendurchmesser der Lagerhülsen (20) ausgleichen können, die in dem oberen Abschnitt des Aufnahmesitzes (7) eingelassen sind, wobei die Anpassungshülsen (37) einen oberen Kragen (38) umfassen, welcher ihren Halt in den Lagerhülsen (20) ermöglicht.

7. Kopfstütze nach irgendeinem der Ansprüche 1 bis 6, **dadurch gekennzeichnet, dass** sie einen Bildschirm (8) umfasst, beispielsweise in der Art eines Flüssigkristallbildschirmes für einen DVD-Lesegerät oder eine Spielkonsole, der in ihre Rückseite eingelassen wird, wobei der Bildschirm (8) in einem Gehäuse (14) lösbar verriegelt ist, das seinerseits in die Rückseite eingesetzt und an dem integrierten Sockel (12) befestigt ist.

8. Kopfstütze nach Anspruch 7, **dadurch gekennzeichnet, dass** sie ein Bildschirmgehäuse (14) umfasst, das in eine Aufnahme (4') eingesetzt ist, die in der hinteren Seite des Schaumstoffkissens (2) angeordnet ist, wobei die Aufnahme (4') durch einen steifen Rahmen (10) begrenzt wird, dessen Breite im Wesentlichen der Dicke des Gehäuses (14) entspricht und an dessen inneren Rand sich der integrierte Sockel (12) abstützt, wobei der Boden des Gehäuses (14) mittels Befestigungsschrauben (15) fest mit dem integrierten Sockel (12) verbunden ist, und die Vorderseite des Gehäuses (14) mit einem umfangsseitigen, überstehenden Kragen (16) ausgestattet ist, der angepasst ist, um sich an dem äußeren Rand des steifen Rahmens (10) abzustützen.

9. Kopfstütze nach Anspruch 8, **dadurch gekennzeichnet, dass** sie ein Kissen (2) aus synthetischem Schaumstoff umfasst, das auf den steifen Rahmen (10) aufgeformt ist.

10. Kopfstütze nach irgendeinem der Ansprüche 7 bis 9, **dadurch gekennzeichnet, dass** sie hohle Verankerungsstangen (6) umfasst, wobei die zur Versorgung des Bildschirmes (8) vorgesehene Verkabelung (40) durch mindestens eine von ihnen hindurch geführt wird.

## Claims

1. A headrest, in particular for motor vehicle seats, made up of a synthetic foam cushion(2) that encloses an integrated support (12) to enable two parallel anchor roads (6) to be fitted onto the receiving seat (7),
**characterized in that** it comprises anchor rods (6) equipped with threaded shafts (18) that extend at a right angle from their upper end, said threaded shafts (18) getting screwed into one of the ends of a housing body (19) equipped with a suitable inner threading and linked to fitting means (24, 25, 26)to fit it onto the integrated support (12).

2. The headrest as recited in claim 1, **characterized in that** the threaded shafts (18) linked to the anchor rods (6) each have a locknut (22) adapted to about against the housing body (19) so as to tighten the position of the anchor rods (6).

3. The headrest as recited in claim 1 or 2, **characterized in that** the housing (19) of the threaded shafts (18) includes a cylindrical sleeve, the sleeve (19) being housed in the base of an attached flat, U-shaped stirrup piece (24), the stirrup piece (24) enclosing a locking lug (30) situated on the integrated support (12) and affixed to the locking lug (30) by a screw-nut tightening system (25-26).

4. The headrest as recited in claim 3, **characterized in that** it has an integrated support (12) equipped with a seat (28) suited to receive the cylindrical sleeve (19) and the threaded shafts (18) that extend the upper ends of the anchor rods (6) at a right angle, with a seat (28), which ends at the front face or the back face of the support (12), being positioned just below the locking lug (30) of the U-shaped stirrup piece (24), and the seat (28) having lower openings (29) for passage of the anchor rods (6), the openings (29) being adapted to the various potential distances between the anchor rods (6).

5. The headrest as recited in claim 4, **characterized in that** the seat (28) of the support (12) has an opening (35) situated below the locking lug (30) in order to facilitate the positioning of the U-shaped stirrup piece (24).

6. The headrest as recited in claims 1 through 5, **characterized in that** it has attached adapter sleeves (37), capable of compensating for the difference between the outer diameter of the anchor rods (6) and the inner diameter of the housing sleeve (20) installed in the upper portion of the receiving seat (7), the adapter sleeves (37) having an upper flange (38) allowing them to be held on the housing sleeves (20).

7. The headrest as recited in any of claims 1 through 6, **characterized in that** it has a monitor (8) of the liquid crystal type for DVD players or for game consoles for example, embedded in its rear face, the monitor (8) being moveably clamped into a casing (14) which is itself embedded in the rear face and fixed on the integrated support (12).

8. The headrest as recited in claim 7, **characterized in that** it has a monitor casing (14) embedded in a housing (4') situated at the rear face of the foam cushion (2), the housing (4') being delimited by a rigid frame (10) whose width essentially corresponds to the thickness of the casing (14) and along the inner rim of which the integrated support comes to rest, the base of the casing (14) being fixed to the integrated support (12) via locking screws (15), and the front face of the casing (14) being equipped with an oversize peripheral flange (16) adapted to come to rest against the outer rim of the rigid frame (10) .

9. The headrest as recited in claim 8, **characterized in that** it has a synthetic foam cushion (2) that is molded onto the rigid frame (10).

10. The headrest as recited in any of claims 7 through 9, **characterized in that** it has hollow anchor rods (6), the cables (40) for power supply of the monitor (8) passing through at least one of these rods (6).
